# EUROPEAN PATENT APPLICATION

(11) **EP 3 189 921 A2**
(43) Date of publication of application: **12.07.2017**
(21) Application number: 16207068.4
(22) Date of filing: 28.12.2016
(51) Int. Cl.: B23H 11/00, B23H 7/02, G05B 19/04

(54) **WIRE ELECTRIC DISCHARGE MACHINE**

(30) Priority: 06.01.2016 JP 2016001174
(71) Applicant: FANUC CORPORATION, Oshino-mura Minamitsuru-gun Yamanashi 401-0597 (JP)
(72) Inventor: HASHIMOTO, Taiju, Minamitsuru-gun, Yamanashi 401-0597 (JP); TAKAHASHI, Shouji, Minamitsuru-gun, Yamanashi 401-0597 (JP)
(74) Representative: Ward, James Norman

(57) **Abstract**

A wire electric discharge machine according to invention prevents occurrence of failure beforehand and prevents machining stop. This can be effected by acquiring an image of a part using an image information collection unit such as a visual sensor with respect to matters, which requires inspection management of the amount of a wire accumulated in a wire electrode storage box, a remaining amount of a wire of a wire bobbin, a level of a machining liquid of a water reservoir and the like, and issuing warning when it is determined, based on the obtained image information, that the failure is highly likely to occur as the wire deposition amount is close to a limit of the wire electrode storage box, the wire remaining amount is small, or the machining liquid level falls below a set value to deal with the state based on this warning.

## Description

### BACKGROUND OF THE INVENTION

### 1. Field of the Invention

The present invention relates to a wire electric discharge machine, and particularly to a wire electric discharge machine which allows easy maintenance and inspection.

### 2. Description of the Related Art

The number of parts and the number of expendables are extremely large in wire electric discharge machines as compared to general machine tools, and accordingly, there are many portions that are subjected to daily inspection, and a worker who performs inspection management has a great load.

Meanwhile, a state of a machine is changed along with the progress of electric discharge machining, and if the inspection management is neglected with respect to a matter that requires management according to such a change, the performance of the machine is insufficiently exhibited or failure occurs in the machine. Examples of phenomena occurring due to the negligence of inspection management may include:
- a case where disposal of a used wire is forgotten, the amount of a wire deposited in a wire electrode storage box increases, and the wire contacts a sensor installed in an upper part of the wire electrode storage box;
- a case where disposal of a used wire is forgotten, and a wire of a wire bobbin is used up in the middle of the operation of wire electric discharge machining; and
- a case where confirmation of the remaining amount of a machining liquid is forgotten and a water surface inside a water reservoir falls below a bottom position of a water level sensor,
and the like. The wire electric discharge machine has a function of giving warning during the operation or performing emergency stop. For example, JP H05-301123 A discloses a wire electric discharge machine that emits warning when detecting that the amount of a wire accumulated in a wire electrode storage box reached a limit. In addition, JP 2009-142936 A discloses a wire electric discharge machine that raises alarm by detecting a decrease of a water level inside a water reservoir of machining liquid to stop the operation.

Conventionally, when inconvenience is caused due to the negligence of inspection management or the like, the warning is output during operation for the emergency stop, and thereafter, the inconvenience is resolved and machining is resumed. When the electric discharge machining is stopped, however, this stoppage of the electric discharge machining may cause the following adverse effects:
- a time loss caused during machining interruption;
- a crease generated in a machined surface when machining is stopped during the machining and the same portion is subjected to the electric discharge again at the time of resuming the machining particularly in finish machining among rough machining to cut out a shape from a workpiece and the finish machining to improve accuracy of a shape and surface roughness by performing the electric discharge while passing a path that has been machined in rough machining, which are generally included in the machining by the wire electric discharge machine; and
- the possibility that machining interruption for a long period of time may cause thermal expansion of the workpiece or parts of the machine due to the variation of the ambient temperature and negative influence on machining accuracy.

### SUMMARY OF THE INVENTION

Thus, an object of the invention is to provide a wire electric discharge machine that is capable of preventing stop of machining and an adverse effect generated by the machining stop by predicting occurrence of failure due to negligence of preliminary inspection management and warning an operator for notification.

A wire electric discharge machine according to the invention includes: an image information collection unit that acquires a state of a part of the wire electric discharge machine changing the state thereof along with the progress of electric discharge machining and requiring management according to the change, as image information; an image determination unit that determines whether the state of the part is that to issue warning based on the image information collected by the image information collection unit; and a warning transmission unit that transmits a warning state when the image determination unit determines that the part is under the warning state, and accordingly, can prevent occurrence of failure in the part requiring inspection management beforehand.

In the wire electric discharge machine according to the invention, the state of the part may be set as a deposition amount of a wire deposited in a wire electrode storage box, and the image determination unit may perform the determination on the warning state depending on an intersection between a boundary line set in advance in the wire electrode storage box and a wire based on the image information.

In the wire electric discharge machine according to the invention, the state of the part may be set to an accumulation amount of a wire deposited in a wire electrode storage box, the image determination unit may calculate a ratio of a surface area of a face defined by the wire accumulated in the wire electrode storage box taken from the image information with respect to the surface area of the wire electrode storage box determines whether the ratio deviates from a threshold set in advance, and conclude that it is under or out of the warning state.

In addition, the state of the part may be set as a remaining amount of a wire of a wire bobbin which supplies the wire to an electric discharge machining portion, and the image determination unit may perform the determination on the warning state based on the wire remaining amount of the wire bobbin in the image information in the electric discharge machine according to the invention.

In addition, the determination on the warning state based on the wire remaining amount may be performed depending on whether a circle of an image of the wire remaining amount is inside a circle of a boundary line set in advance as a threshold or depending on comparison between a radius of the circle of the image of the wire remaining amount and a radius set in advance as a threshold in the electric discharge machine according to the invention.

In addition, the state of the part may be set as a level of a machining liquid in a water reservoir which is configured to supply the machining liquid to an electric discharge machining region, the water reservoir may be provided with a ball tap whose protruding amount from the water reservoir is changed depending on the water level, and the image determination unit may perform the determination on the warning state based on the protruding amount of the ball tap from the water reservoir in the image information, in the wire electric discharge machine according to the invention.

In addition, the determination on the warning state based on the protruding amount of the ball tap from the water reservoir may be performed depending on whether there is an intersection between a boundary line set in advance as a threshold and the ball tap protruding from the water reservoir or depending on whether a length of the ball tap protruding from the water reservoir is a length, set as a predetermined threshold, or less, in the wire electric discharge machine according to the invention.

In the wire electric discharge machine according to the invention, the state of the part is set as at least one of a deposition amount of a wire deposited in a wire electrode storage box, a remaining amount of a wire of a wire bobbin, and a water level of a machining liquid of a water reservoir. In addition, the image information collection unit may be mounted to a robot in the wire electric discharge machine according to the invention.

It is possible to prevent the occurrence of failure beforehand and to prevent the machining by giving the warning even when the state of the machine is changed along with the progress of the electric discharge machining and the inspection management of the part that requires the management according to the change is neglected, the performance of the machine is insufficiently exhibited or failure occurs in the machine to urge the inspection management.

### BRIEF DESCRIPTION OF THE DRAWINGS

The above-described and other objects and characteristics of the present invention are made apparent in the following description of an embodiment with reference to the appended drawings. Of these drawings:
FIG. 1A is a diagram illustrating an arrangement position of an image information collection unit that acquires the image information of a state of a part which requires inspection management according to an embodiment of the invention, and is a diagram illustrating an example in which image information of a state of a wire accumulated in a wire electrode storage box is collected;
FIG. 1B is a diagram illustrating an example in which image information of a state of a remaining amount of a wire of a wire bobbin is collected;
FIG. 1C is a diagram illustrating an example in which image information of a water level state of a machining liquid inside a water reservoir of the machining liquid is collected;
FIG. 2 is an explanatory diagram illustrating an example in which the image information collection unit is attached to a robot and the image information of the wire accumulation state in the wire electrode storage box is acquired;
FIG. 3 is an explanatory diagram illustrating an example in which the image information collection unit is attached to the robot and the image information of the state of the wire remaining amount of the wire bobbin is acquired;
FIG. 4 is an explanatory diagram illustrating an example in which the image information collection unit is attached to the robot and the image information of the state of the machining liquid level of the water reservoir is acquired;
FIG. 5A is an explanatory diagram in which whether warning is to be issued is determined depending on the number of intersections between a wire accumulated in the wire electrode storage box, and a set boundary line, and is a diagram illustrating a case where warning is not issued;
FIG. 5B is a diagram illustrating a case where the warning is issued;
FIG. 6 is an explanatory diagram in which whether the warning is to be issued is determined depending on the area of a wire defined by the general contour of the wire accumulated in the wire electrode storage box;
FIG. 7A is an explanatory diagram in which whether the warning is to be issued is determined depending on a circle of the wire remaining amount of the wire bobbin and a circle of the set boundary line, and is a diagram illustrating a case where the warning is not issued;
FIG. 7B is a diagram illustrating a case where the warning is issued;
FIG. 8 is an explanatory diagram in which whether the warning is to be issued is determined depending on a radius of the circle of the wire remaining amount of the wire bobbin and a set radius;
FIG. 9A is an explanatory diagram in which whether the warning is to be issued is determined depending on a ball tap provided in the water reservoir and the set boundary line, and is a diagram illustrating a case where the warning is not issued;
FIG. 9B is a diagram illustrating a case where the warning is issued;
FIG. 10 is an explanatory diagram in which whether the warning is to be issued is determined depending on a protruding amount of the ball tap, provided in the water reservoir, from the water reservoir;
FIG. 11 is an overview diagram of an embodiment of the invention; and
FIG. 12 is a flowchart illustrating an algorithm of warning output executed by a processor of a control device of a wire electric discharge machine according to the embodiment.

### DETAILED DESCRIPTION OF THE PREFERRED EMBODIMENTS

Hereinafter, embodiments of the present invention will be described with reference to the drawings.

The invention is configured to be able to prevent the occurrence of failure and the stoppage of the machining operation of electric discharge machining due to the failure by predicting the failure to be occurred in a wire electric discharge machine and issuing warning based on image information obtained by an image information collection unit.

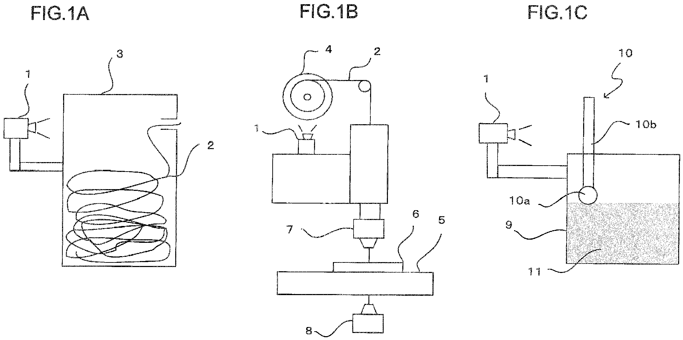

FIG. 1A is an explanatory diagram in which an image information collection unit 1 collects image information of a state of a wire accumulated in a wire electrode storage box, FIG. 1B is an explanatory diagram in which the image information collection unit 1 collects image information of a state of a remaining amount of a wire of a wire bobbin, and FIG. 1C is an explanatory diagram in which the image information collection unit 1 collects image information of a state of a level of a machining liquid inside a water reservoir. An imaging device such as a visual sensor may be used as the image information collection unit.

In FIG. 1A, it is configured such that the amount of wire accumulated in a wire electrode storage box 3 is imaged by the image information collection unit 1. When the accumulated amount of a wire 2 reaches a value set in advance for issuing the warning, and the warning that the accumulated amount of wire is approaching to a limit is adapted to be generated based on the obtained image information. The wire electrode storage box 3 is configured to have a transparent or grid-shaped structure such that an image of the wire 2 accumulating therein can be acquired by the image information collection unit 1. In addition, the image information collection unit 1 is fixed to a machine position at which the image of the wire 2 accumulating in the wire electrode storage box 3 can be acquired.

In FIG. 1B, it is configured such that the state of the wire remaining amount of a wire bobbin 4 is imaged by the image information collection unit 1. When the wire remaining amount reaches a value set in advance for the generation of warning, and the warning that the wire remaining amount is little or the like is issued based on the obtained image information. The image information collection unit 1 is fixed at a machine position at which the image information of the wire remaining amount of the wire bobbin 4 can be acquired. Incidentally, in FIG. 1B, reference sign 5 represents a table, reference sign 6 represents a workpiece, and reference signs 7 and 8 represent an upper guide and a lower guide respectively.

In FIG. 1C, it is configured such that the state of the machining liquid level inside a water reservoir 9 of a machining liquid 11 is imaged by the image information collection unit 1. When the water level of the machining liquid reaches a value set in advance for the generation of warning, the warning for decrease of the water level is issued based on the obtained image information, and a ball tap 10 formed of a ball 10a and a support rod 10b, which moves up and down along with upward and downward movement of the water surface in the water reservoir 9 and is provided in the water reservoir 9 of the machining liquid 11. The image information collection unit 1 imaging the ball tap 10 is attached to a machine.

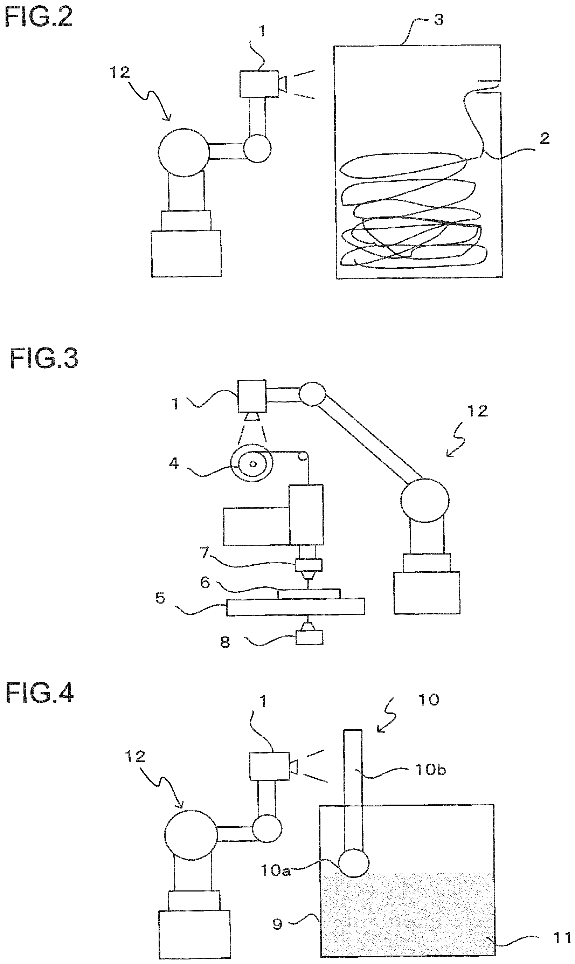

FIGS. 1A to 1C illustrate the examples in which the image information collection unit 1, which acquires the image information to obtain the wire accumulation state in the wire electrode storage box 3, the wire remaining amount of the wire bobbin 4, or the state of the level of the water reservoir 9 of the machining liquid, is attached to a wire electric discharge machine, but the image information collection unit 1 may be attached to a robot such that the image information indicating the wire accumulation state, the wire remaining amount, or the level may be obtained by the single image information collection unit 1. FIG. 2 illustrates an example in which the image information indicating the wire accumulation state is obtained by the image information collection unit 1 attached to a robot 12, FIG. 3 illustrates an example in which the image information indicating the wire remaining amount of the wire bobbin 4 is obtained by the image information collection unit 1 attached to the robot 12, and FIG. 4 is a diagram illustrating an example in which the image information indicating the level of the water reservoir 9 of the machining liquid 11 is obtained by the image information collection unit 1 attached to the robot 12.

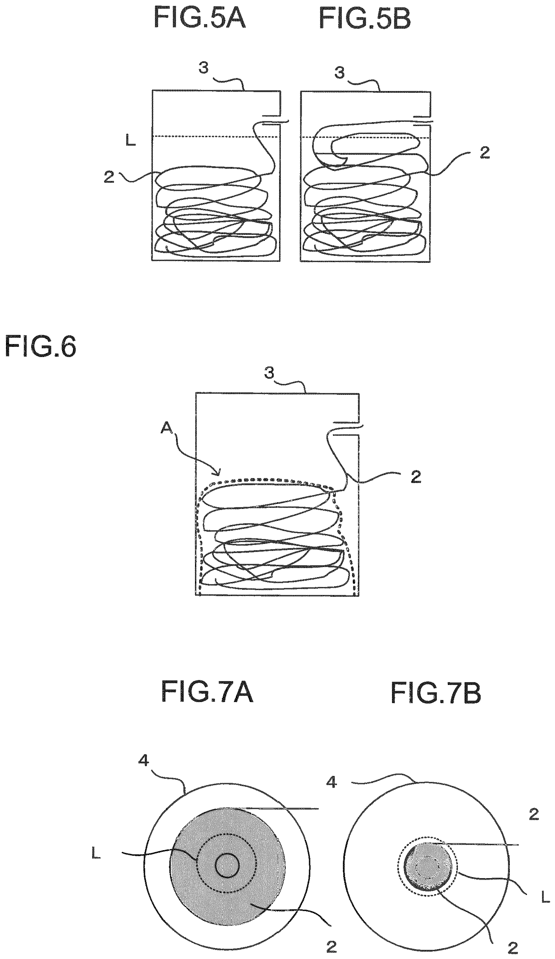

FIGS. 5A and 5B are explanatory diagrams of an example of a method of determining whether the warning is output based on the image information of the wire accumulation state of the wire electrode storage box 3. A height of accumulated wire increases as the amount of the wire accumulated in the wire electrode storage box 3 increases. Thus, a threshold for issuing the warning that the accumulated amount of wire is close to a limit value is set in advance for an image to be acquired by the image information collection unit 1 for the wire electrode storage box, as a boundary line L of the level of accumulated wire. Further, it is configured such that the warning is issued when the number of intersections between the boundary line L and the wire becomes or exceeds a set number. For example, when the set value of the number of intersection is two, the warning is not issued in FIG. 5A since there is one intersection, and the warning is issued when the number of intersections becomes two or more as in FIG. 5B.

In addition, examples of a criteria on whether the warning is issued may include not only the number of the intersection between the boundary line set as the reference and the wire but also a face defined by the accumulated wire. The surface area A of the face is taken from the acquired image, calculate the surface area A of the face, and issue the warning when the ratio of the surface area A to the surface area of the wire electrode storage box is equal to or exceeds the predetermined value. Thus the warning condition can be determined on the basis of the surface area of the electrode storage box and that A defined by the accumulated wire.

FIGS. 7A and 7B are explanatory diagrams in which whether the warning is to be issued is determined based on a captured image of the wire bobbin 4. A circle defining a boundary line L for providing a threshold for issuing warning, is set in advance for an image from the image information collection unit 1 adapted to capture images amount of the wire remaining in the wire bobbin 4. The warning is adapted to be issued when the circle showing the remaining amount of wire is included inside the set boundary line. The warning is not issued in FIG. 7A since a circle showing the wire remaining amount is larger than the circle of boundary line L, and the warning is to be issued when the circle of the wire remaining amount becomes overlapped or included within the circle of the set boundary line L as in FIG. 7B.

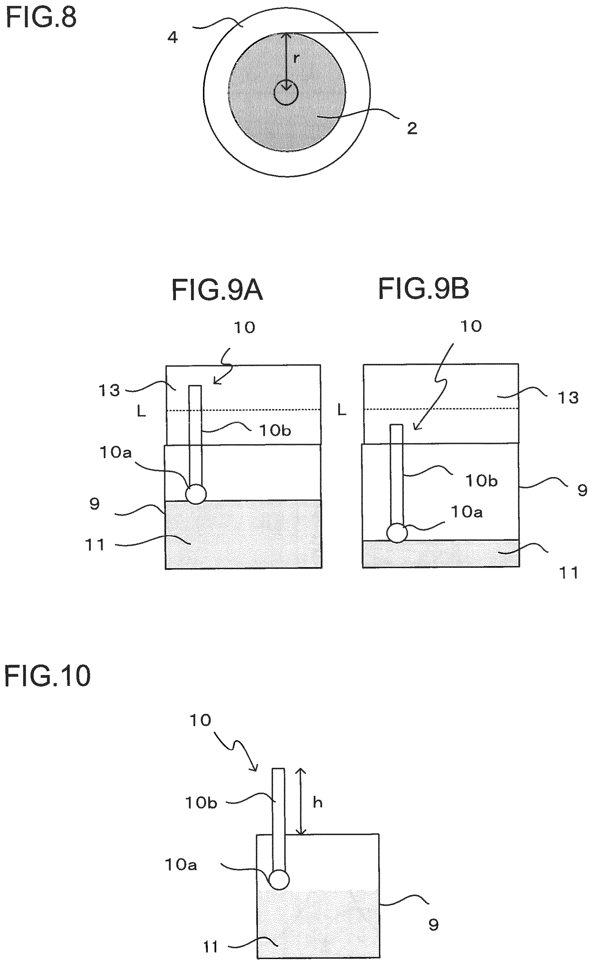

In addition, on whether the warning is to be issued may be determined from a radius of the circle of the wire remaining amount as illustrated in FIG. 8. A radius defining a threshold for the issuance of warning is set in advance in the captured image of the wire bobbin 4. Determine on whether a radius r of an image of the wire remaining amount is equal to or smaller than the radius set as the threshold based on the image information from the image information collection unit 1 imaging the wire remaining amount of the wire bobbin 4, the warning is output when the radius r is equal to or smaller than the set radius.

FIGS. 9A and 9B are explanatory diagrams in which on whether the warning is to be issued is determined based on a captured image of the water reservoir 9. A plate 13 on which a boundary line L for the output of warning is drawn is arranged at the back of the water reservoir 9. The ball tap 10 also moves vertically to the up-and-down movement of the water surface of the machining liquid 11 in the water reservoir 9. The warning is remain deactivated when the intersection between the boundary line L and the support rod 10b of the ball tap 10 on an image captured by the image information collection unit 1 is given as illustrated in FIG. 9A, and the warning is issued when the amount of the machining liquid decreases and there is no intersection between the boundary line L and the support rod 10b of the ball tap 10 as illustrated in FIG. 9B.

In addition, the warning may be activated depending on a length of the support rod 10b of the ball tap protruding from the water reservoir 9 on an image captured by the image information collection unit 1 for the water reservoir as illustrated in FIG. 10. A length h of the support rod 10b of the ball tap protruding from the water reservoir 9 on the captured image is set in advance as a threshold for the issuance of warning, and the warning indicating a loss of the machining liquid inside the water reservoir 9 is issued when the length of the support rod 10b of the ball tap protruding from the water reservoir 9 on the captured image is the set value or less.

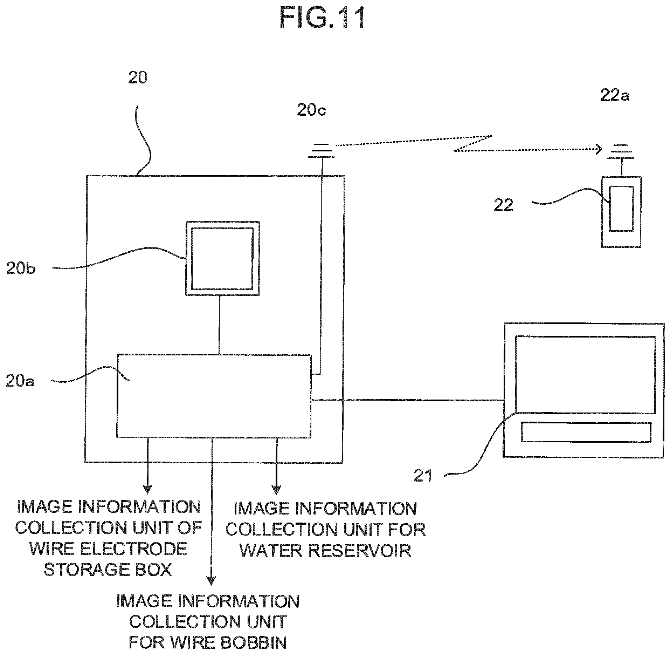

FIG. 11 is an overview diagram of an embodiment of the wire electric discharge machine which has a warning generation function in order to prevent machining stop due to negligence of inspection management on the basis of an image captured by the image information collection unit 1 regarding the above-described matters that require the inspection management.

In FIG. 11, reference sign 20 represents the wire electric discharge machine, and a control device 20a of the wire electric discharge machine is connected to the image information collection unit for the wire electrode storage box that images the state of the accumulation of the wire in the wire electrode storage box, the image information collection unit for the wire bobbin that images the wire remaining amount of the wire bobbin 4, and the image information collection unit for the water reservoir that images the state of the machining liquid of the water reservoir 9 as illustrated in FIGS. 1A to 1C. In addition, reference sign 20b represents a display device provided in the wire electric discharge machine 20, and the above-described warning is displayed on the display device 20b. Further, the control device 20a is connected to a personal computer 21 for displaying the warning on a screen thereof. The control device 20a of the wire electric discharge machine may be provided with an information communication unit for displaying the warning on the screen of a portable display device 22 via antennas 20c and 22a so as to display the warning. These display devices form a warning transmission unit, and further, any one of the display device 20b provided in the wire electric discharge machine 20, the display device of the computer 21, and the portable display device 22 may be used as the display device.

Incidentally, when the image information collection unit 1 is attached to the robot 12 and the wire electrode storage box 3, the wire bobbin 4, and the water reservoir 9 are sequentially imaged by the single image information collection unit 1 as illustrated in FIGS. 2,3 and 4 the control device 20a of the wire electric discharge machine 20 and the control device 20a of the robot 12 are connected to each other, the drive control of the robot is performed by the control device of the robot 12 based on an image capturing command from the control device 20a of the wire electric discharge machine 20, the robot 12 is sequentially moved to each position to capture the wire electrode storage box 3, the wire bobbin 4, and the water reservoir 9 by the image information collection unit 1 to capture images at the respective positions, and thus captured image information is transmitted to the control device 20a of the wire electric discharge machine 20.

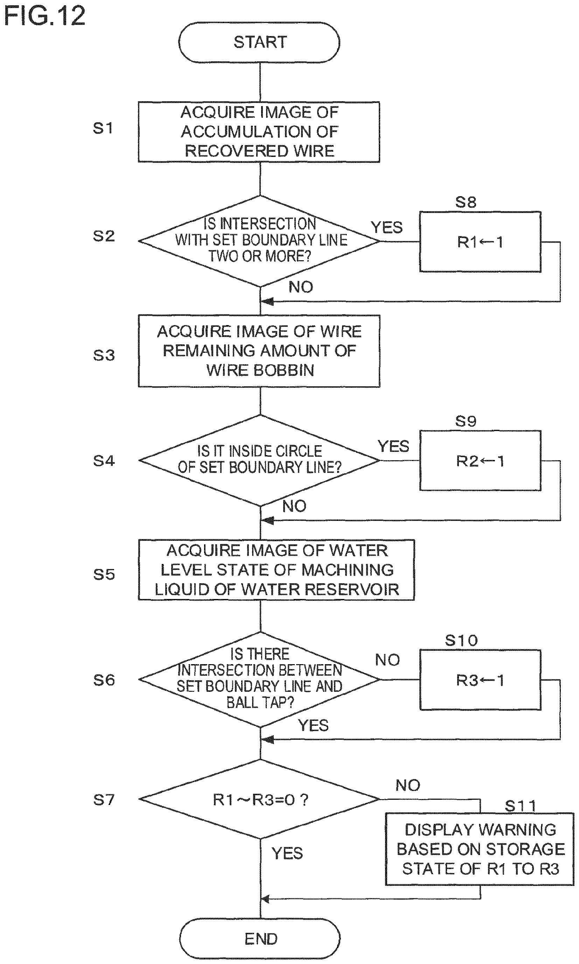

FIG. 12 is a flowchart illustrating an algorithm of a warning issuance process which is executed by a processor of the control device 20a of the wire electric discharge machine 20 in order to prevent the machining stop due to the negligence of inspection regarding the matters that require the inspection.

The processor of the control device 20a of the wire electric discharge machine 20 executes the process illustrated in FIG. 12 when the operation of the wire electric discharge machine is started or every predetermined period during the operation of the wire electric discharge machine.

First, the state of accumulation of the wire in the wire electrode storage box 3 is imaged by the image information collection unit 1 for the wire electrode storage box, and the captured image information thereof is acquired (Step S1). Next, whether the wire accumulation state reaches the level to issue the warning is determined based on the captured image information. In this example illustrated in FIG. 12, the determination is performed depending on whether the intersection between the set boundary line L and the wire is two or more as illustrated in FIGS. 5A and 5B (Step S2).

When the intersection between the set boundary line and the wire 2 is less than two, the state of the amount of the wire remaining in wire bobbin 4 is imaged by the image information collection unit 1 for the wire bobbin to acquire the captured image information thereof (Step S3), and whether the remained amount of the wire reaches an amount to issue the warning is determined based on the captured image information. In this example illustrated in FIG. 12, this determination is performed depending on whether the circle of the wire remaining amount is inside the circle of the set boundary line L as illustrated in FIGS. 7A and 7B (Step S4).

When the circle of the wire remaining amount is larger than the circle of the set boundary line L, the water level state of the machining liquid 11 of the water reservoir 9 is imaged by the image information collection unit 1 for the water reservoir 9 to acquire the captured image information thereof (Step S5), and whether the level of the machining liquid is the water level to issue the warning or less is determined based on the captured image information. In this example illustrated in FIG. 12, this determination is performed depending on whether there is an intersection between the support rod 10b of the ball tap 10 and the boundary line L drawn on the plate 13 arranged at the back of the water reservoir 9 as illustrated in FIGS. 9A and 9B (Step S6). When there is the intersection as illustrated in FIG. 9A, the process proceeds to Step S7 to determine whether all registers R1 to R3, which will be described later, are "0", and this process ends without outputting the warning in the case of "0". Incidentally, the registers R1 to R3 are configured to be reset to "0" upon commencement of the operation of the wire electric discharge machine.

On the other hand, when it is determined there are two or more intersections between the set boundary line L and the wire in Step S2 and it is thus determined that the wire accumulation amount reaches the level to output the warning, the register R1 is set to "1" (Step S8), and the process proceeds to Step S3. In addition, when it is determined that the circle of the wire remaining amount of the wire bobbin 4 is inside the circle of the set boundary line L in Step S4 and the wire remaining amount reaches the level at which the warning needs to be issued, the register R2 is set to "1" (Step S9), and the process proceeds to Step S5. Further, when it is determined that there is no intersection between the boundary line L and the support rod 10b of the ball tap 10 and the level of the machining liquid 11 inside the water reservoir 9 reaches the level or less to issue the warning in Step S6, the register R3 is set to "1" (Step S10), and the process proceeds to Step S7. Further, whether all the registers R1 to R3 are "0" is determined, and the warning is displayed on a screen of the display device (the display device included in the wire electric discharge machine, the display device of the personal computer or the portable display device) based on the values stored in the registers R1 to R3 when any one of the registers is set to "1" (Step S11). That is, the warning indicating that the wire accumulation amount of the wire electrode storage box 3 is close to the limit is displayed when the register R1 is set to "1", the warning indicating that the wire remaining amount of the wire bobbin 4 is close to the limit is displayed when the register R2 is set to "1", and the warning indicating that the level of the machining liquid 11 of the water reservoir 9 decreases close to the limit is displayed when the register R3 is set to "1".

An operator may deal with the matter based on the warning displayed in this manner and can prevent the machining stop by removing the wire in the wire electrode storage box 3 when receiving the warning that the wire accumulation amount is close to the limit or adding the machining liquid in the water reservoir when receiving the warning that the decrease of the level of the machining liquid. In addition, when receiving the warning that the wire remaining amount is little, the wire bobbin 4 may be replaced at the time of start of the operation of the wire electric discharge machine or the wire bobbin may be replaced at an appropriate stage in the middle of machining in which no affection can be exerted on the quality of the machining.

The embodiment of the present invention has been described as above, but the present invention is not limited to the above-described embodiment and can be implemented in various modes by applying suitable modifications.

## Claims

1. A wire electric discharge machine comprising:
an image information collection unit that acquires a state of a part of the wire electric discharge machine changing the state thereof along with the progress of electric discharge machining and requiring management according to the change, as image information;
an image determination unit that determines whether the state of the part is that to issue warning based on the image information collected by the image information collection unit; and
a warning transmission unit that transmits a warning state when the image determination unit determines that the part is under the warning state.

2. The wire electric discharge machine according to claim 1, wherein
the state of the part is a deposition amount of a wire deposited in a wire electrode storage box, and
the image determination unit performs the determination on the warning state depending on an intersection between a boundary line set in advance in the wire electrode storage box and a wire based on the image information.

3. The wire electric discharge machine according to claim 1, wherein
the state of the part is an accumulated amount of a wire deposited in a wire electrode storage box, and
the image determination unit calculates a ratio of a surface area of a face defined by the wire accumulated in the wire electrode storage box taken from the image information with respect to the surface area of the box, determines whether the ratio deviates from a threshold set in advance, and concludes that it is under or out of the warning state.

4. The wire electric discharge machine according to claim 1, wherein
the state of the part is a remaining amount of a wire of a wire bobbin which supplies the wire to an electric discharge machining portion, and
the image determination unit performs the determination on the warning state based on the wire remaining amount of the wire bobbin in the image information.

5. The wire electric discharge machine according to claim 4, wherein
the determination on the warning state, which is performed by the image determination unit based on the image information is performed such that whether a state is the warning state is determined depending on whether a circle of an image of the wire remaining amount is inside a circle of a boundary line set in advance as a threshold or depending on comparison between a radius of the circle of the image of the wire remaining amount and a radius set in advance as a threshold.

6. The wire electric discharge machine according to claim 1, wherein
the state of the part is a level of a machining liquid in a water reservoir which is configured to supply the machining liquid to an electric discharge machining region,
the water reservoir is provided with a ball tap whose protruding amount from the water reservoir is changed depending on the water level, and
the image determination unit performs the determination on the warning state based on the protruding amount of the ball tap from the water reservoir in the image information.

7. The wire electric discharge machine according to claim 6, wherein
the image determination unit performs the determination on the warning state depending on whether there is an intersection between a boundary line set in advance as a threshold and the ball tap protruding from the water reservoir or depending on whether a length of the ball tap protruding from the water reservoir is a length set as a predetermined threshold, or less.

8. The wire electric discharge machine according to claim 1, wherein
the state of the part is at least one of an accumulated amount of a wire deposited in a wire electrode storage box, a remaining amount of a wire of a wire bobbin, and a level of a machining liquid in a water reservoir.

9. The wire electric discharge machine according to any one of claims 1 to 8, wherein
the image information collection unit is mounted on a robot.
